# EUROPEAN PATENT SPECIFICATION

(11) **EP 3 607 329 B1**
(45) Date of publication and mention of the grant of the patent: **30.12.2020**
(21) Application number: 18721146.1
(22) Date of filing: 04.04.2018
(51) Int. Cl.: G01N 35/04, B65G 15/62

(54) **LABORATORY AUTOMATION SYSTEM FOR HANDLING TEST TUBES**
LABORAUTOMATISIERUNGSSYSTEM ZUR HANDHABUNG VON REAGENZGLÄSERN
SYSTÈME D'AUTOMATISATION DE LABORATOIRE POUR LA MANUTENTION DE TUBES À ESSAI

(30) Priority: 06.04.2017 IT 201700038201
(43) Date of publication of application: 12.02.2020
(73) Proprietor: Inpeco Holding Ltd., Qormi, CBD 5030 (MT)
(72) Inventor: PEDRAZZINI, Gianandrea, 6900 Paradiso (CH)
(74) Representative: Notaro, Giancarlo
(86) International application number: PCT/IB2018/052329
(87) International publication number: WO 2018/185680

(56) References cited:
- EP-A1- 3 127 839
- WO-A1-2010/146098
- US-A1- 2009 260 457

## Description

The present invention relates to a laboratory automation system for the automated handling of samples of biological material, in particular test tubes.

Samples of biological material collected in special containers such as, in the case of blood, test tubes made of plastic or glass, undergo a series of steps aimed at preparing, analyzing and then preserving them in appropriate analysis laboratories. Said steps are typically referred to as identification step, pre-analytical step, analytical step and post-analytical step.

The strong increase in demands for laboratory service led to a wide technological development in the field of analysis laboratories, in particular there is a growing trend for the automation of the single steps characterizing the management of the samples of biological material or the complete and continuous automation of all the aforesaid steps.

Laboratory automation systems are known, capable of providing the routing and automation of the entire work cycle implemented on a sample of biological material to be analyzed, from the first step of identifying the sample to the step of collecting the results. Such systems allow human intervention to be minimized as much as possible during the various steps of the process, thus reducing the error risks and keeping the safety of the operator himself/herself. In particular, patent EP 2225567 B1 describes a laboratory automation system of the aforesaid type. Such an automation system comprises two frameworks able to define two or more lanes in each framework to allow the handling of the test tubes, i.e. to carry the test tubes, or the carrier able to contain them, along the system and direct them towards the devices connected to the system itself. The lanes in each of the frameworks are defined by separation elements coupled to the framework, so that each lane is separated by the separation elements and allows the sliding of a conveyor belt and of the test tubes lying thereon. The belt thus moves along the upper wall of the framework, which defines the base wall of each lane. The separation elements define the side walls of each lane and are coupled by engagement inside the framework. Such a coupling is obtained by a rigid coupling portion, which mimics the shape of the coupling slot defined on the corresponding framework.

However, the construction of the lanes by said separation elements is subject to several problems, both in the step of pre-assembling the system and in the step of installing it at the user's premises.

In fact, in order to allow the assembly, the coupling by means of the rigid coupling portion requires the construction of profiles with perfect orthogonality, resulting in precise and costly manufacturing operations which increase the cost of the system. Furthermore, in the case of imperfect orthogonality between the parts, despite maintaining the coupling to the framework, resizings of the lanes obtained may occur which prevent the correct passage of the test tube or the carrier supporting it. In order to overcome such a problem, it is thus necessary to act on the orthogonality of the separation element, which must be worn out to the extent of weakening the structure of the element itself.

A further and more complex problem is related to the permanent deformation of the coupling slot obtained on the framework. In fact, despite the construction of the separation elements with perfect orthogonality, the coupling type tends to modify the shape of the slot, enlarging it and damaging the coupling over time. It is thus necessary to add filler material to increase the thickness of the coupling portion or glue the parts, with a consequent loss in orthogonality and/or in the possibility of modifying the structure of the lanes later. Furthermore, as a consequence of the deformation of the framework when coupling the separation elements, the upper surface of the framework does not define a linear support plane either for the base surface of the lanes or for the devices connected to the system.

Therefore, it would be desirable to have a laboratory automation system capable of minimizing the aforesaid drawbacks. In particular, it would be desirable to have a laboratory automation system, which presents an easy and replicable assembly.

It would also be desirable to have a laboratory automation system capable of keeping the original technical features unaltered over time.

US-2009/260457 describes a laboratory automation system with lanes for handling test tubes containing samples of biological material.

EP-3127839 describes profiles able to be coupled with grooves in chain conveyors.

Therefore, it is the object of the present invention to provide a laboratory automation system such as to overcome the aforesaid problems. In particular, it is the object of the present invention to obtain an automation system wherein the assembly is quick and simple to be performed. In particular, it is the object of the present invention to provide a laboratory automation system in which the number of lanes defined in each framework is modular and reconfigurable.

It is another object of the present invention to provide a laboratory automation system which minimizes the time and effort needed to manage the planarity and orthogonality between the parts, in particular when defining the lanes.

It is a further object of the present invention to provide a laboratory automation system which keeps the technical assembly features unaltered over time and during the work cycles carried out.

The aforesaid objects are achieved by a laboratory automation system according to the appended claims.

The laboratory automation system for handling test tubes containing samples of biological material along one or more guiding lanes comprises a framework defining the base wall of the guiding lanes, and at least two guiding profiles defining the opposite side walls of the guiding lanes, the framework is provided with two or more coupling slots of the guiding profiles to the framework, obtained along the base wall, the guiding profile comprises a coupling portion shaped to be inserted and elastically deformed inside the coupling slot, the guiding profile is able to be coupled by interference to the coupling slot, the coupling portion maintains the elastic deformation when coupled and fully inserted inside the coupling slot, the coupling slot comprises a bottom portion and an inlet portion arranged between the base wall and the bottom portion, the guiding profiles comprise an abutment portion, shaped to be arranged in contact with the base wall when the coupling portion is fully inserted inside the coupling slot, the coupling portion comprises a central portion and an end portion, wherein the guiding profiles comprise a centering portion, arranged between the abutment portion and the central portion of the coupling portion, wherein the width of the cross section of the guiding profile at the central portion is smaller than the width of the cross section of the centering portion, wherein the bottom portion has a cross-section width smaller than the inlet portion, and wherein the inlet portion is able to be coupled with the centering portion.

The elastic deformation of the coupling portion thus ensures the sealing between the framework and the guiding profiles, minimizing the management of the orthogonality therebetween while eliminating problems of plastic deformation of the framework due to the coupling. This allows a quick and easy assembly to be obtained, capable of absorbing the planarity and orthogonality defects between the parts.

Preferably, the width of the cross section of the guiding profile at the central portion is smaller than the width of the cross section of the end portion.

The end portion thus allows to bear the load to which the opposite side walls of the guiding lanes are subjected, while the central portion allows to obtain the elastic deformation for the coupling according to the present invention.

Preferably, the width of the cross section of the guiding profile at the centering portion is greater than the cross-section width of the bottom portion.

The centering portion is thus prevented from being inserted inside the bottom portion.

Preferably, the maximum width of the cross section of the guiding profile at the coupling portion is greater than the width of the bottom portion and such as to ensure a coupling by interference.

The coupling between the slot and the guiding profiles can thus be obtained by friction lap joint, i.e. maintaining the interference.

Preferably, the centering portion is orthogonal to the abutment portion, and oriented in the coupling direction.

The correct alignment of the elements to be coupled is thus ensured upstream of the coupling, before interference is created therebetween.

Preferably, the coupling portion comprises a slit, which defines and separates two opposite walls arranged on the sides of the guiding profile.

The side walls thus allow to define the elastic deformation elements which allow to achieve the effects of the present invention, once the coupling is completed.

Preferably, the coupling portion comprises an element made of plastic material arranged inside the slit and able to reinforce the opposite walls defined by the slit.

The element made of plastic material thus allows the elastic behavior of the opposite walls to be improved while opposing greater resistance during the coupling.

Preferably, the length of the centering portion is greater than the length of the coupling portion.

The orthogonality features of the coupling are thus improved and the stresses on the load at the coupling portion are minimized.

Preferably, the slit extends over a length greater than the length of the coupling portion and smaller than the sum of the lengths of the coupling portion and the centering portion.

The elastic deformation features of the coupling portion are thus improved, while keeping unaltered the orthogonality features between the coupled parts.

These and further features and advantages of the present invention will become more apparent from the following description of preferred embodiments, given by way of non-limiting example in the accompanying drawings, in which:
- Figure 1 is a top perspective view of a laboratory automation system according to the present invention;
- Figure 2 is a cross-sectional view of the laboratory automation system of Figure 1;
- Figure 3 is a cross-sectional view of the framework and the guiding profiles of the laboratory automation system in a first embodiment;
- Figure 4A is a top perspective view of the guiding profile of the laboratory automation system in the first embodiment of Figure 3;
- Figure 4B is a front view of the guiding profile of the laboratory automation system in the first embodiment of Figure 3;
- Figure 4C is a top perspective view of the coupling slot obtained on the framework of the laboratory automation system in the first embodiment of Figure 3;
- Figure 4D is a top perspective view of the coupling between the guiding profile and the coupling slot of Figures 4A and 4C;
- Figure 5A is a top perspective view of the guiding profile of the laboratory automation system in a second embodiment;
- Figure 5B is a top perspective view of the coupling between the guiding profile and the coupling slot of Figures 5A and 4C.

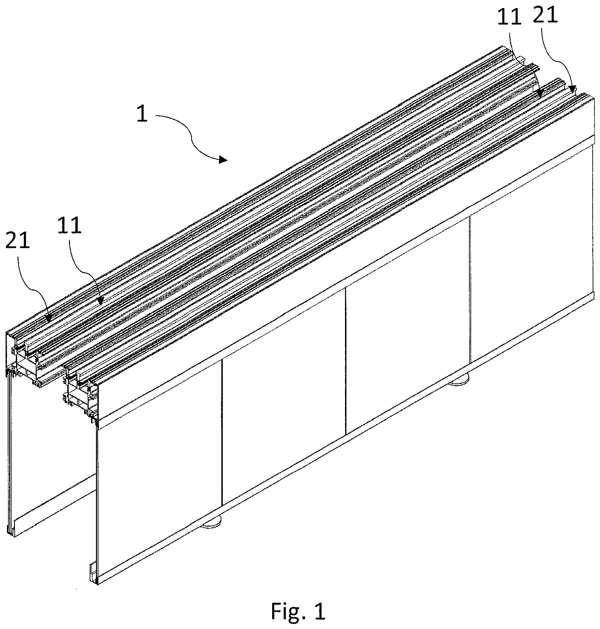

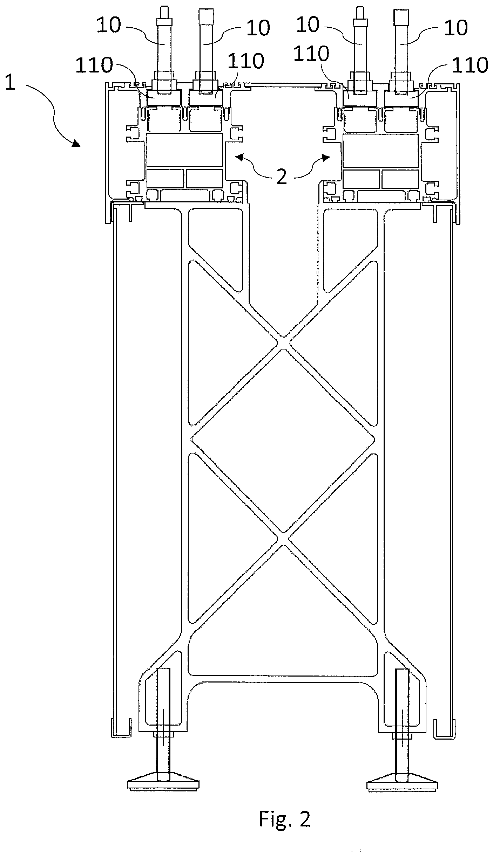

A laboratory automation system 1 according to the present invention for handling test tubes 10 containing samples of biological material, along one or more guiding lanes, is shown with reference to Figures 1 and 2. A portion of the system 1 is shown by way of example, without some components unnecessary for the understanding of the invention, including the means for handling the test tubes 10 and electrical/electronic devices. The system 1 is provided with two main guiding lanes 11, arranged in a parallel and opposite position, and two secondary guiding lanes 21, each arranged alongside one of the main guiding lanes 11 shown. The function of the main guiding lanes 11 is to handle the test tubes 10 containing samples of biological material arranged inside appropriate carriers 110, or to handle the empty carriers 110 themselves along the laboratory automation system 1. The function of the secondary guiding lanes 21 is to handle the test tubes 10 containing samples of biological material, directing them towards the devices (not shown) connected to the laboratory automation system 1, such as pre-analysis, analysis and post-analysis modules or stations, and vice versa. In the embodiment shown herein, each pair of main guiding lanes 11 and secondary guiding lanes 21 allows the handling of the aforesaid test tubes 10, or the corresponding empty carriers 110, along a same direction while the pair of guiding lanes in an opposite position performs the same handling along the opposite direction. The aforesaid lanes can be connected at the corresponding ends by appropriate connecting lanes (not shown) or they can be coupled to further portions able to modify the rectilinear path depicted.

The automation system 1 according to the present invention can have a different number or arrangements of lanes, i.e. it can be provided with further secondary guiding lanes with respect to what is depicted.

The handling of the test tubes 10, or the carriers 110, along the aforesaid guiding lanes 11, 21 preferably takes place by motorized conveyor belts (not shown) housed inside each of the aforesaid guiding lanes 11, 21.

Figure 2 shows a cross section of the system 1 of Figure 1, which allows a better appreciation of the construction of the system 1 itself and of the main 11 and secondary 21 guiding lanes. The laboratory automation system 1 comprises a framework 2, which defines the base wall of the guiding lanes and at least two guiding profiles defining the opposite side walls of the guiding lanes 11, 21. In particular, in the embodiment shown herein, the system 1 comprises two frameworks 2, or beams, which allow to support the weight of the test tubes 10 and the carriers 110 handled within the guiding lanes 11, 21. Such frameworks 2 are preferably made of metal material, especially aluminum alloy, to obtain a reduced weight according to the maximization of the sustainable load.

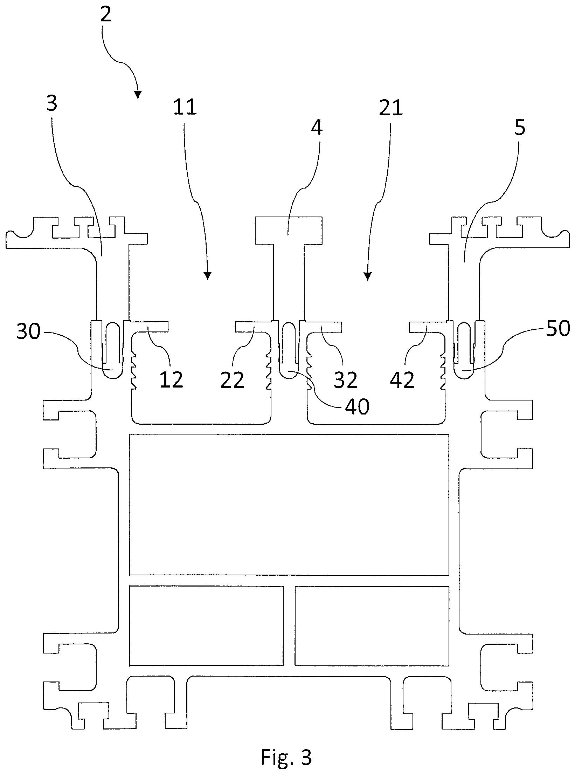

As shown in greater detail in Figure 3, the upper surface of each framework 2 defines the base walls of the corresponding main 11 and secondary 21 guiding lanes. In particular, in the embodiment shown, the upper surface comprises four planes 12, 22, 32, 42 placed side-by-side, which define, in pairs, the base walls of the respective main 11 and secondary 21 guiding lanes. Two or more coupling slots of the guiding profiles to said frameworks 2 are obtained at the aforesaid base walls, and along the whole extension of the framework 2. In the embodiment shown herein, three coupling slots 30, 40, 50 are obtained in each framework 2, which allow the coupling to a maximum of three corresponding guiding profiles able to divide the guiding lanes, i.e. to separate the main lanes from the secondary lanes, as described in detail below. Therefore, the embodiment shown in Figure 3 has for each framework 2 a coupling with three guiding profiles 3, 4, 5 which contribute to delimit the main 11 and secondary 21 guiding lanes, defining the side walls thereof. In particular, the two guiding profiles 3, 5 arranged on the sides of the framework 2, inside the corresponding coupling slots 30, 50, have the same shape, while a third guiding profile 4 has a different shape, and is arranged between the two guiding profiles 3 and 5, inside the corresponding coupling slot 40. Therefore, the guiding profile 4 centrally arranged allows the effective separation between the main 11 and secondary 21 guiding lanes, while defining one of the two side walls of each lane.

The shape of the guiding profiles can undergo modifications, which do not alter the inventive efficacy of the present invention. In particular, the aforesaid guiding profiles could all have the same shape or totally different shapes. In particular, the guiding profiles can be replaced by appropriate bulkheads (not shown), e.g. U-shaped bulkheads, which allow to prevent the access to one or more guiding lanes. Similarly the number of the guiding profiles, and of the corresponding coupling slots, can be modified depending on the number of lanes to be defined for the system.

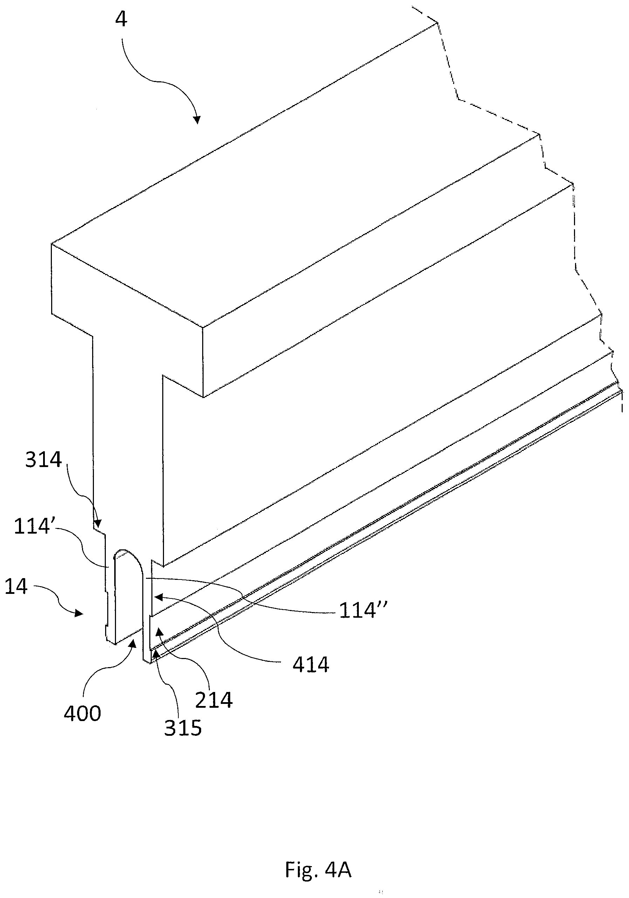

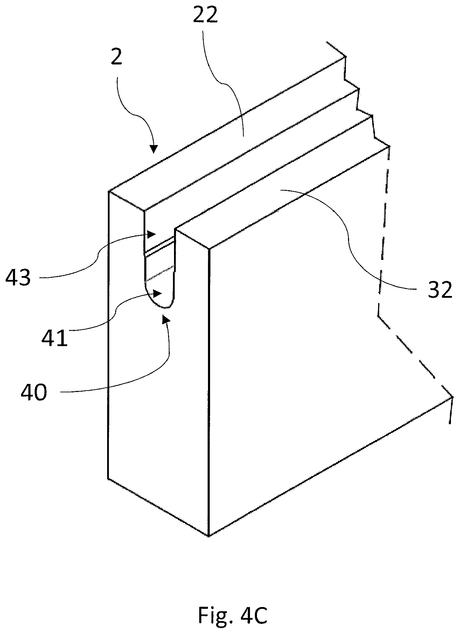

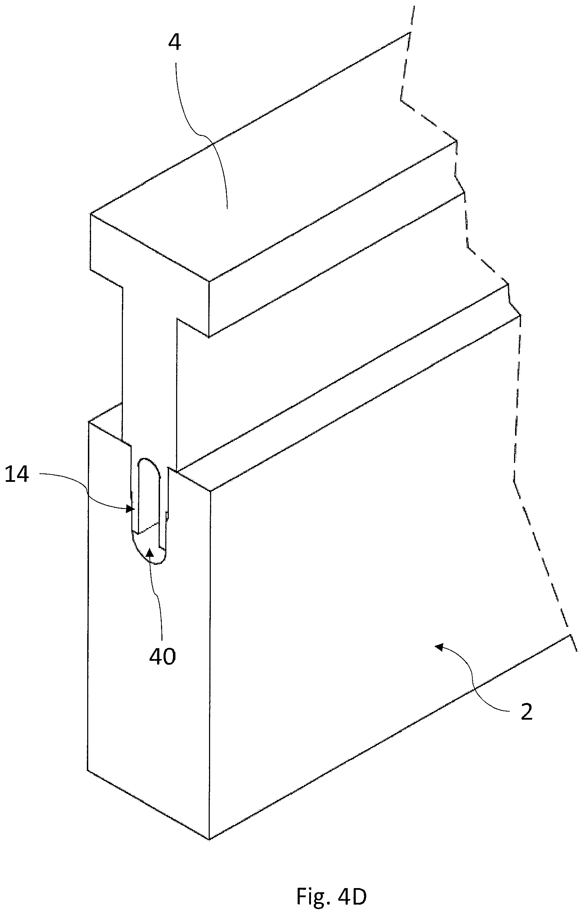

Figures 4A-4D show in detail the first embodiment according to the present invention. In particular, Figures 4A-4B show the central guiding profile 4 (perspective and front plan views), figure 4C shows the portion of the framework 2 provided with the corresponding coupling slot 40, and figure 4D shows a coupling detail between the guiding profile 4 and the respective framework 2. The guiding profile 4 is provided with a coupling portion 14 comprising a slit 400, which defines and separates two opposite walls 114', 114" arranged on the sides of the guiding profile 4. The slit 400 is thus U-shaped with the connecting portion arranged in an opposite position with respect to the end of the guiding profile 4, i.e. in an opposite position with respect to the end of the aforesaid opposite walls 114', 114". According to the present invention, the aforesaid slit 400 is arranged at the end of the guiding profile 4, obtaining an opening which extends from the same end to the U-shaped connecting portion. The side walls thus define two opposite wings 114', 114" arranged on the sides of the guiding profile 4 and separated by the same slit 400 which defines them.

In a further embodiment (not shown), the aforesaid opposite walls can be connected to each other at the end of the guiding profile, obtaining an opening between the walls themselves, connected in a U in one of the two end portions and perpendicularly tapered in the opposite end portion. In a further embodiment (not shown), the end portions of the slit can both be connected, e.g. in a U, or both perpendicularly tapered.

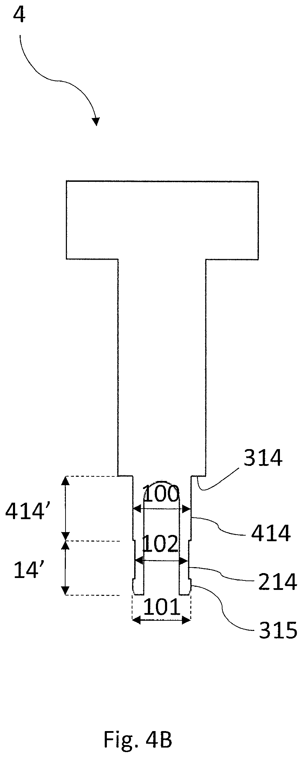

Discussing the embodiment of the guiding profile 4 shown in Figures 4A and 4B, each of the two opposite wings 114', 114" is provided with an end portion 315, arranged at the end of the guiding profile 4, and with a central portion 214, adjacent to said end portion 315. The previously described coupling portion 14 thus comprises such central 214 and end 315 portions. Furthermore, the aforesaid central 214 and end 315 portions preferably have different thicknesses, in particular the end portion 315 has a greater width than the adjacent central portion 214. In a further embodiment (not shown), the coupling portion may consist of a single element not divided into various portions, in particular having a width equal to that of the previously described end portion.

The coupling slot inside which the guiding profile 4 must be engaged can be obtained by an opening obtained on the framework 2 starting from the base walls thereof. The shape of the aforesaid opening can be obtained according to multiple configurations, e.g. by simply milling the framework with a tapered or joined end. Anyway, regardless of the shape of the coupling slot, the coupling portion 14 of the guiding profile 4 is shaped so as to be inserted and elastically deformed inside the coupling slot.

The coupling slot 40 inside which the guiding profile 4 must be engaged, in the preferred embodiment, is shown by way of example in Figure 4C. The framework 2 has a coupling slot 40 comprising a first bottom portion 41 and an inlet portion 43, the latter arranged between the base wall, represented by the planes 22, 32 placed side-by-side, and the bottom portion 41 itself. Such a structure of the coupling slot 40 can be replicated on each coupling slot (not shown) with which the framework 2 can be provided. Therefore, the coupling slot 40 shown in the aforesaid embodiment has an opening defining the two bottom 41 and inlet 43 portions with different dimensions. In particular, the bottom portion 41 has a smaller width than the inlet portion 43. In a further embodiment (not shown), the coupling slot can consist of a single element, not divided into various portions, in particular having a width equal to that of the previously described bottom portion.

The particular shape of the coupling slot 40 thus requires a corresponding particular shape of the coupling portion 14 of the guiding profile 4. In fact, the latter comprises an abutment portion 314 and a centering portion 414, wherein the abutment portion 314 is shaped to be arranged in contact with the base wall, i.e. with the planes 22, 32, when the coupling portion 14 is fully inserted inside the coupling slot 40, thus defining a mechanical stop, or abutment, when coupling the two elements.

The centering portion 414 is preferably orthogonal to the abutment portion 314, and oriented in the coupling direction.

The inlet portion 43 is able to be coupled with the centering portion 414.

The centering portion 414 is arranged between the abutment portion 314 and the coupling portion 14, playing an important role upstream of the coupling itself, i.e. the correct alignment of the elements to be coupled before interference is created therebetween. The coupling between the coupling slot 40 and the guiding profiles 4 can thus be obtained so as to ensure orthogonality between the parts, without the need for further checks.

In order to allow an effective use of the described shapes both for the coupling slot 40 and for the related coupling portion 14, the dimensions of the different portions in place have such differences as to ensure technical efficacy when performing the required functions. In particular, according to the present invention, the width of the cross section 100 of the guiding profile 4 at the centering portion 414 is greater than the width of the bottom portion 41 and of the cross section 102 of the central portion 214.

The width of the cross section 101 of the guiding profile 4 at the coupling portion 14 is greater than the width of the bottom portion 41 (Figure 4B) and such as to ensure a coupling by interference. The described sizing allows the features of elastic deformation of the coupling portion to be improved, while keeping the orthogonality features among the coupled parts unaltered.

Preferably, the width of the section 101 corresponds to the width of the end portion 315, and it is preferably greater than the width of the section 102 of the central portion 214.

Furthermore, although not essential for the purposes of correct centering, the length of the centering portion 414 is greater than the length of the coupling portion 14. The orthogonality features of the coupling are thus improved, while minimizing the stresses on the load at the coupling portion 14.

To complete the geometrical shapes, in the embodiment shown in Figure 4A, the slit 400 which defines the coupling portion 14 extends over a length greater than the length 14' of the coupling portion 14 and smaller than the sum of the lengths 14', 414' of the coupling portion 14 and the centering portion 414, respectively (Figure 4B).

Therefore, the guiding profile 4 is able to be coupled by interference to the coupling slot 40 by inserting the coupling portion 14 inside the coupling slot 40, as shown in Figure 4D. The preferred sizing for the coupling is of the friction lap joint-type. This allows to ensure a normal force to the surfaces, by choosing appropriate dimensional tolerances, which ensure an interference by exploiting the friction coefficient. Furthermore, a tangential force is developed on the framework 2, such as to ensure the coupling of the guiding profile 4 avoiding plastic deformations, both on the aforesaid guiding profile 4 and on the framework 2.

The coupling of the guiding profile 4 to the framework 2 is substantially obtained in two steps. The guiding profile 4 is moved close to and inserted inside the coupling slot 40, starting from the coupling portion 14. During such a step, the centering portion 414, arranged between the abutment portion 314 and the coupling portion 14, has the function of alignment between the guiding profile 4 itself and the coupling slot 40, without any interference being created at the coupling portion 14. The function of alignment is allowed and facilitated by the shape of the coupling slot 40, in particular by the inlet portion 43 and by the adjacent bottom portion 41, the latter having a dimension which prevents the insertion of the centering portion 414.

After defining the first contact between the centering portion 414 and the inlet portion 43, the second coupling step begins, wherein, while the centering portion 414 maintains the alignment, the coupling portion 14 is forcibly inserted inside the bottom portion 41 of the coupling slot. In fact, the bottom portion 41 has a smaller width than the inlet portion 43, such as to prevent the insertion of the centering portion 414 but to allow the insertion of the coupling portion 14 by friction lap joint, i.e. maintaining the interference. In particular, according to the present invention the width of the cross section 100 of the guiding profile 4 at the centering portion 414 is greater than the width of the bottom portion 41, and the width of the cross section 101 of the guiding profile 4 at the coupling portion 14 is greater than the width of the bottom portion 41 but smaller, at least at the end portion 315 thereof, than the width of the cross section 100 of the guiding profile 4 at the centering portion 414. In particular, in the embodiment disclosed herein, it is the maximum width of the cross section 101 of the guiding profile 4 at the coupling portion 14 which is greater than the width of the bottom portion 41, and such a maximum width of the cross section 101 corresponds to the same width at the end portion 315.

By way of mere example, a sizing of the guiding profile 4 can be assumed, which comprises a width of the cross section 100 of the profile at the centering section equal to 6 mm, with an asymmetrical tolerance of 0.10 mm rounding down and 0.05 mm rounding up. The width of the cross section 101 of the guiding profile 4 at the coupling portion 14, in particular the maximum width of the aforesaid section at the end portion 315, is of 5.9 mm, with an identical asymmetrical tolerance of 0.10 mm rounding down and 0.05 mm rounding up. Similarly, a length of the centering portion 414 can be assumed to be equal to 6.5 mm and a length of the coupling portion 14 equal to 5.5 mm, the latter obtained as the sum of the lengths of the central 214 and end 315 portions.

Instead, as regards the sizing of the coupling slot 40, a width of the inlet portion 43 can correspondingly be assumed to be equal to 6.1 mm, with asymmetrical tolerance equal to 0.00 mm rounding down and 0.15 mm rounding up. The same applies to the width of the bottom portion 41, equal to 5.6 mm with identical asymmetrical tolerance equal to 0.00 mm rounding down and 0.15 mm rounding up. The length of the coupling slot 40 can be defined by the length dimension of the inlet portion 43 equal to 7.3 mm and the length dimension of the bottom portion 41 equal to 7.7 mm, 2.8 mm of which forming the connection of the U-shaped end portion of the coupling slot 40.

The coupling portion 14 of the guiding profile 4 is thus shaped to be inserted and elastically deformed inside the coupling slot 40, thus maintaining the elastic deformation of the coupling portion 14 when this is coupled and fully inserted inside the coupling slot 40. The same considerations also apply to the guiding profiles 3, 5 according to the present invention, when coupled and fully inserted inside the respective coupling slots 30, 50, as shown in Figure 3. Reference will be made below, by way of example, only to the guiding profile 4 and the respective coupling slot 40, though all of the set-forth considerations also have the same value for the aforesaid guiding profiles 3, 5 and the related coupling slots 30, 50.

The coupling of the guiding profile 4 inside the respective coupling slot 40 is obtained by deformation in the elastic range of the opposite wings 114', 114", or opposite walls, placed at the ends of the guiding profile 4 itself. This allows a solid joint to be obtained, which cannot be uncoupled manually, while avoiding the use of filling materials which tend to force the coupling.

The joint coupling with deformation in the elastic range of the opposite wings 114', 114" also allows the parts to be uncoupled relatively easily and the operations of engagement and disengagement to be repeated several times without observing any deformation in the plastic range, i.e. without creating any permanent deformation in the coupling portion 14 or in the coupling slot 40. Therefore, the deformations in the elastic range allow to solve the problem outlined in the prior art, i.e. the deformation of the coupling slot and the subsequent need to use increasingly more filling material to restore a sufficient joint situation, bridging the distances between the two elements to be coupled.

In the embodiment described herein, the maximum width dimension of the opposite wings 114', 114", considering the whole coupling portion 14, is thus equal to 5.95 mm at maximum tolerance and 5.8 mm at its minimum. In contrast, the value of the coupling slot 40 at the bottom portion 41 is a width value equal to 5.6 mm at minimum tolerance and 5.75 mm at maximum tolerance. It can easily be inferred that the design dimensions thus create an average interference of about 0.2 mm, which can be considered an average assembly tolerance, varying from a minimum interference of 0.05 mm to a maximum interference of 0.35 mm. The sizing of the width value of the aforesaid wings can thus allow a reduction in value of no less than 5.75 mm, thus allowing an interference of about 0.05 mm in total, which can be considered a minimum assembly tolerance. Such a minimum sizing can be necessary to avoid a deformation on the tip of the wings in contact with the bottom of the coupling slot 40, in consideration of the connection radius of the U-shaped end portion of the slot 40 itself.

The definition of the lengths related to the described portions also allows the desired technical effects to be implemented. In particular, the length of the bottom portion 41 is designed to facilitate the stress of the opposite wings 114', 114" thus obtaining the desired elastic deformation during friction lap joint operations inside the coupling slot 40. In this respect, the total length of the bottom portion 41, equal to 7.7 mm, is greater than the total length of the coupling portion 14, thus allowing the correct and complete insertion of the coupling portion 14 inside the bottom portion 41. However, the total length has a first rectilinear part equal to 4.9 mm and a second joined part equal to 2.8 mm. As described above, the length of the coupling portion 14 is equal to 5.5 mm, therefore 0.6 mm of the coupling portion 14 are further forced by the connection arranged at the bottom of the coupling slot 40, thus increasing the elastic deformation applied at the end portion 315 of the opposite wings 114', 114".

Once the joint between the coupling portion 14 and the coupling slot 40 has been defined, the end portions 315, having a width greater than the central portions 214 of the opposite wings 114', 114" themselves, ensure greater supporting stability, also in this case reducing the risk of deformations on the aforesaid opposite wings 114', 114". In fact, the presence of the end portions 315 allows the maximum sizing in tolerance to be used without encountering problems related to the plastic deformation of the opposite wings 114', 114".

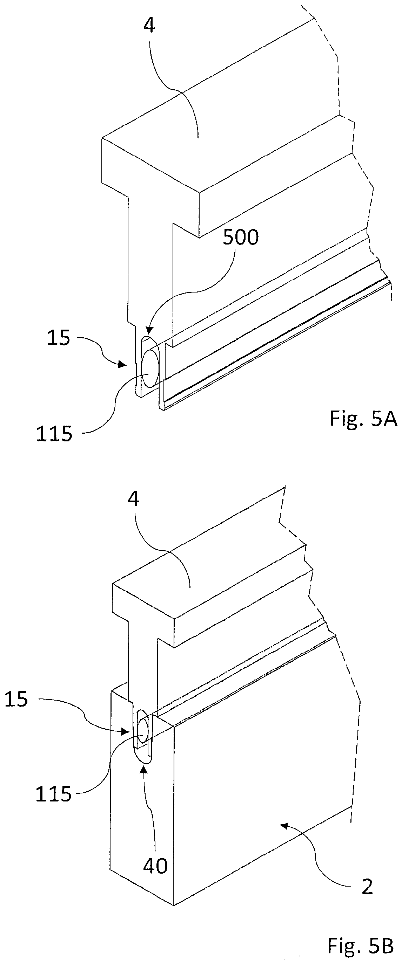

In a second embodiment, shown in Figures 5A-5B, the coupling portion 15 comprises an element 115 made of plastic material arranged inside the slit 500 and able to reinforce the opposite walls, which in this case define the opposite wings of the coupling portion 15 itself, according to what already described for the first embodiment.

In the embodiment shown, the plastic element 115 consists of a belt with a circular section made of polymeric material, in particular of polyurethane. Such a belt offers high simplicity during the operations of installation and maintenance, while ensuring resistance to wear and abrasion, and therefore a high working life. The element 115 made of plastic material has the function of deformable thickness, to facilitate the coupling of the guiding profile 4, especially in cases with minimum interference. The use of such a material, characterized by high flexibility and elasticity, as well as high resistance to wear and abrasion, thus allows the guiding profile 4 to be correctly fixed to the coupling slot 40, significantly increasing the resistance to extraction once the profile 4 is planted.

The deformations in the elastic range thus allow the problem set forth in the prior art to be solved, i.e. the deformation of the coupling slot and the subsequent need to use increasingly more filling material to restore a situation of sufficient joint, bridging the distances between the two elements to be coupled. In fact, the elastic deformation of the coupling portion ensures the sealing between the framework and the guiding profiles, while minimizing the management of the orthogonality therebetween and eliminating the problems of plastic deformation of the framework due to the coupling. This allows a quick and easy assembly to be obtained, capable of absorbing the planarity and orthogonality defects between the parts.

## Claims

1. Laboratory automation system (1) for handling test tubes (10) containing samples of biological material along one or more guiding lanes (11, 21), said laboratory automation system (1) comprises a framework (2) defining the base wall (12, 22, 32, 42) of said guiding lanes (11, 21) and at least two guiding profiles (3, 4, 5) defining the opposite side walls of said guiding lanes (11, 21), said framework (2) is provided with two or more coupling slots (30, 40, 50) of respective guiding profiles (3, 4, 5) to said framework (2) obtained along said base wall (12, 22, 32, 42),
**characterized in that**
each guiding profile (3, 4, 5) comprises a coupling portion (14, 15) shaped to be inserted and elastically deformed inside the coupling slot (30, 40, 50),
each guiding profile (3, 4, 5) is able to be coupled by interference to the coupling slot (30, 40, 50),
said coupling portion (14, 15) maintains said elastic deformation when coupled and fully inserted inside the coupling slot (30, 40, 50),
each guiding profile (3, 4, 5) comprises an abutment portion (314), shaped to be arranged in contact with said base wall (12, 22, 32, 42) when said coupling portion (14, 15) is fully inserted inside the coupling slot (30, 40, 50),
said coupling portion (14, 15) comprises a central portion (214) and an end portion (315),
each guiding profile (3, 4, 5) comprises a centering portion (414), arranged between said abutment portion (314) and said central portion (214) of the coupling portion (14, 15),
the width of the cross section (102) of each guiding profile (3, 4, 5) at said central portion (214) is smaller than the width of the cross section (100) of the centering portion (414).

2. A system (1) according to claim 1, **characterized in that** the coupling slot (30, 40, 50) comprises a bottom portion (41) and an inlet portion (43), said inlet portion (43) being arranged between said base wall (12, 22, 32, 42) and said bottom portion (41).

3. A system (1) according to claim 2, **characterized in that** said bottom portion (41) has a cross-section width smaller than said inlet portion (43).

4. A system (1) according to claim 2 or 3, **characterized in that** said inlet portion (43) is able to be coupled with the centering portion (414).

5. A system (1) according to any one of the preceding claims, **characterized in that** the width of the cross section (102) of each guiding profile (3, 4, 5) at said central portion (214) is smaller than the width of the cross section (101) of the end portion (315).

6. A system (1) according to any one of the claims 2-5, **characterized in that** the width of the cross section (100) of each guiding profile (3, 4, 5) at said centering portion (414) is greater than the cross-section width of said bottom portion (41).

7. A system (1) according to any one of the claims 2-6, **characterized in that** the maximum width of the cross section (101) of each guiding profile (3, 4, 5) at said coupling portion (14, 15) is greater than the width of said bottom portion (41) and such as to ensure a coupling by interference.

8. A system (1) according to any one of the preceding claims, **characterized in that** the centering portion (414) is orthogonal to the abutment portion (314), and is oriented in the coupling direction.

9. A system (1) according to any one of the preceding claims, **characterized in that** said coupling portion (14, 15) comprises a slit (400, 500), which defines and separates two opposite walls (114', 114") arranged on the sides of each guiding profile (3, 4, 5).

10. A system (1) according to claim 9, **characterized in that** said coupling portion (15) comprises an element (115) made of plastic material arranged inside said slit (500) and able to reinforce said opposite walls (114', 114").

11. A system (1) according to any one of the preceding claims, **characterized in that** the length of said centering portion (414) is greater than the length of said coupling portion (14, 15).

12. A system (1) according to claim 9 or 10, **characterized in that** said slit (400, 500) extends over a length greater than the length of said coupling portion (14, 15) and smaller than the sum of the lengths of said coupling portion (14, 15) and said centering portion (414).

## Patentansprüche

1. Laborautomatisierungssystem (1) zur Handhabung von Reagenzgläsern (10), die Proben biologischen Materials entlang einer oder mehrerer Führungsbahnen (11, 21) enthalten, wobei das Laborautomatisierungssystem (1) einen Rahmen (2), der die Basiswand (12, 22, 32, 42) der Führungsbahnen (11, 21) definiert, und wenigstens zwei Führungsprofile (3, 4, 5) umfasst, die die gegenüberliegenden Seitenwände der Führungsbahnen (11, 21) definieren, wobei der Rahmen (2) mit zwei oder mehreren Kopplungsschlitzen (30, 40, 50) von jeweiligen Führungsprofilen (3, 4, 5) mit dem Rahmen (2) bereitgestellt wird, die entlang der Basiswand (12, 22, 32, 42) erhalten werden, **dadurch gekennzeichnet, dass**
jedes Führungsprofil (3, 4, 5) ein Kopplungsteil (14, 15) umfasst, das so geformt ist, dass es innerhalb des Kopplungsschlitzes (30, 40, 50) eingesetzt und elastisch verformt wird,
jedes Führungsprofil (3, 4, 5) in der Lage ist, durch Eingreifen mit dem Kopplungsschlitz (30, 40, 50) gekoppelt zu werden,
das Kopplungsteil (14, 15) die elastische Verformung beibehält, wenn es gekoppelt und vollständig innerhalb des Kopplungsschlitzes (30, 40, 50) eingesetzt ist,
jedes Führungsprofil (3, 4, 5) ein Anschlagteil (314) umfasst, das so geformt ist, dass es in Kontakt mit der Basiswand (12, 22, 32, 42) angeordnet ist, wenn das Kopplungsteil (14, 15) vollständig innerhalb des Kopplungsschlitzes (30, 40, 50) eingesetzt ist,
das Kopplungsteil (14, 15) ein Mittelteil (214) und ein Endteil (315) umfasst,
jedes Führungsprofil (3, 4, 5) ein Zentrierteil (414) umfasst, das zwischen dem Anschlagteil (314) und dem Mittelteil (214) des Kopplungsteils (14, 15) angeordnet ist,
die Breite des Querschnitts (102) von jedem Führungsprofil (3, 4, 5) an dem Mittelteil (214) kleiner ist als die Breite des Querschnitts (100) des Zentrierteils (414).

2. System (1) nach Anspruch 1, **dadurch gekennzeichnet, dass** der Kopplungsschlitz (30, 40, 50) ein Bodenteil (41) und ein Einlassteil (43) umfasst, wobei das Einlassteil (43) zwischen der Basiswand (12, 22, 32, 42) und dem Bodenteil (41) angeordnet ist.

3. System (1) nach Anspruch 2, **dadurch gekennzeichnet, dass** das Bodenteil (41) eine Querschnittsbreite hat, die kleiner ist als das Einlassteil (43).

4. System (1) nach Anspruch 2 oder 3, **dadurch gekennzeichnet, dass** das Einlassteil (43) in der Lage ist, mit dem Zentrierteil (414) gekoppelt zu werden.

5. System (1) nach einem der vorhergehenden Ansprüche, **dadurch gekennzeichnet, dass** die Breite des Querschnitts (102) von jedem Führungsprofil (3, 4, 5) am Mittelteil (214) kleiner ist als die Breite des Querschnitts (101) des Endteils (315).

6. System (1) nach einem der Ansprüche 2 - 5, **dadurch gekennzeichnet, dass** die Breite des Querschnitts (100) von jedem Führungsprofil (3, 4, 5) am Zentrierteil (414) größer ist als die Querschnittsbreite des Bodenteils (41).

7. System (1) nach einem der Ansprüche 2 - 6, **dadurch gekennzeichnet, dass** die maximale Breite des Querschnitts (101) von jedem Führungsprofil (3, 4, 5) am dem Kopplungsteil (14, 15) größer ist als die Breite des Bodenteils (41) und damit so, dass eine Kopplung durch Eingreifen gewährleistet ist.

8. System (1) nach einem der vorhergehenden Ansprüche, **dadurch gekennzeichnet, dass** das Zentrierteil (414) orthogonal zum Anschlagteil (314) verläuft und in der Kopplungsrichtung ausgerichtet ist.

9. System (1) nach einem der vorhergehenden Ansprüche, **dadurch gekennzeichnet, dass** das Kopplungsteil (14, 15) einen Schlitz (400, 500) umfasst, der zwei gegenüberliegende Wände (114', 114") definiert und trennt, die an den Seiten von jedem Führungsprofil (3, 4, 5) angeordnet sind.

10. System (1) nach Anspruch 9, **dadurch gekennzeichnet, dass** das Kopplungsteil (15) ein Element (115) aus Kunststoffmaterial umfasst, das innerhalb des Schlitzes (500) angeordnet und in der Lage ist, die gegenüberliegenden Wände (114', 114") zu verstärken.

11. System (1) nach einem der vorhergehenden Ansprüche, **dadurch gekennzeichnet, dass** die Länge des Zentrierteils (414) größer ist als die Länge des Kopplungsteils (14, 15).

12. System (1) nach Anspruch 9 oder 10, **dadurch gekennzeichnet, dass** sich der Schlitz (400, 500) über eine Länge erstreckt, die größer ist als die Länge des Kopplungsteils (14, 15) und kleiner als die Summe der Längen des Kopplungsteils (14, 15) und des Zentrierteils (414).

## Revendications

1. Système d'automatisation de laboratoire (1) pour manipuler des tubes à essai (10) contenant des échantillons de matériel biologique le long d'une ou de plusieurs voie(s) de guidage (11, 21), ledit système d'automatisation de laboratoire (1) comprend un cadre (2) définissant la paroi de base (12, 22, 32, 42) desdites voies de guidage (11, 21) et au moins deux profils de guidage (3, 4, 5) définissant les parois latérales opposées desdites voies de guidage (11, 21), ledit cadre (2) est pourvu de deux fentes de couplage (30, 40, 50) ou plus de profils de guidage respectifs (3, 4, 5) audit cadre (2) obtenues le long de ladite paroi de base (12, 22, 32, 42), **caractérisé en ce que**
chaque profil de guidage (3, 4, 5) comprend une partie de couplage (14, 15) formée pour être insérée et élastiquement déformée à l'intérieur de la fente de couplage (30, 40, 50),
chaque profil de guidage (3, 4, 5) peut être couplé par interférence à la fente de couplage (30, 40, 50),
ladite partie de couplage (14, 15) maintient ladite déformation élastique lorsqu'elle est couplée et complètement insérée à l'intérieur de la fente de couplage (30, 40, 50),
chaque profil de guidage (3, 4, 5) comprend une partie de butée (314), formée pour être agencée en contact avec ladite paroi de base (12, 22, 32, 42) lorsque ladite partie de couplage (14, 15) est complètement insérée à l'intérieur la fente de couplage (30, 40, 50),
ladite partie de couplage (14, 15) comprend une partie centrale (214) et une partie d'extrémité (315),
chaque profil de guidage (3, 4, 5) comprend une partie de centrage (414), agencée entre ladite partie de butée (314) et ladite partie centrale (214) de la partie de couplage (14, 15),
la largeur de la section transversale (102) de chaque profil de guidage (3, 4, 5) au niveau de ladite partie centrale (214) est inférieure à la largeur de la section transversale (100) de la partie de centrage (414).

2. Système (1) selon la revendication 1, **caractérisé en ce que** la fente de couplage (30, 40, 50) comprend une partie inférieure (41) et une partie d'entrée (43), ladite partie d'entrée (43) étant agencée entre ladite paroi de base (12, 22, 32, 42) et ladite partie inférieure (41).

3. Système (1) selon la revendication 2, **caractérisé en ce que** ladite partie inférieure (41) a une largeur de section transversale inférieure à celle de ladite partie d'entrée (43).

4. Système (1) selon la revendication 2 ou 3, **caractérisé en ce que** ladite partie d'entrée (43) peut être couplée à la partie de centrage (414).

5. Système (1) selon l'une quelconque des revendications précédentes, **caractérisé en ce que** la largeur de la section transversale (102) de chaque profil de guidage (3, 4, 5) au niveau de ladite partie centrale (214) est inférieure à la largeur de la section transversale (101) de la partie d'extrémité (315).

6. Système (1) selon l'une quelconque des revendications 2 à 5, **caractérisé en ce que** la largeur de la section transversale (100) de chaque profil de guidage (3, 4, 5) au niveau de ladite partie de centrage (414) est supérieure à la largeur de section transversale de ladite partie inférieure (41).

7. Système (1) selon l'une quelconque des revendications 2 à 6, **caractérisé en ce que** la largeur maximale de la section transversale (101) de chaque profil de guidage (3, 4, 5) au niveau de ladite partie de couplage (14, 15) est supérieure à la largeur de ladite partie inférieure (41) et telle qu'elle assure un couplage par interférence.

8. Système (1) selon l'une quelconque des revendications précédentes, **caractérisé en ce que** la partie de centrage (414) est orthogonale à la partie de butée (314), et est orientée dans la direction de couplage.

9. Système (1) selon l'une quelconque des revendications précédentes, **caractérisé en ce que** ladite partie de couplage (14, 15) comprend une fente (400, 500), qui définit et sépare deux parois opposées (114', 114") agencées sur les côtés de chaque profil de guidage (3, 4, 5).

10. Système (1) selon la revendication 9, **caractérisé en ce que** ladite partie de couplage (15) comprend un élément (115) en matière plastique agencé à l'intérieur de ladite fente (500) et capable de renforcer lesdites parois opposées (114', 114").

11. Système (1) selon l'une quelconque des revendications précédentes, **caractérisé en ce que** la longueur de ladite partie de centrage (414) est supérieure à la longueur de ladite partie de couplage (14, 15).

12. Système (1) selon la revendication 9 ou 10, **caractérisé en ce que** ladite fente (400, 500) s'étend sur une longueur supérieure à la longueur de ladite partie de couplage (14, 15) et inférieure à la somme des longueurs de ladite partie de couplage (14, 15) et de ladite partie de centrage (414).
